# EUROPÄISCHE PATENTSCHRIFT

(11) **EP 0 907 533 B1**
(45) Veröffentlichungstag und Bekanntmachung des Hinweises auf die Patenterteilung: **13.03.2002**
(21) Anmeldenummer: 97929270.3
(22) Anmeldetag: 24.06.1997
(51) Int. Cl.: B60T 8/36, F15B 1/033

(54) **HYDRAULISCHE BREMSANLAGE MIT EINER EINRICHTUNG ZUR AKTIVBREMSUNG**
HYDRAULIC BRAKE SYSTEM WITH AN ACTIVE BRAKING DEVICE
INSTALLATION DE FREINAGE HYDRAULIQUE POURVUE D'UN DISPOSITIF DE FREINAGE ACTIF

(30) Priorität: 01.07.1996 DE 19626305
(43) Veröffentlichungstag der Anmeldung: 14.04.1999
(73) Patentinhaber: Continental Teves AG & Co. oHG, 60488 Frankfurt (DE)
(72) Erfinder: VOGEL, Günther, D-63303 Dreieich (DE)
(74) Vertreter: Blum, Klaus-Dieter
(86) Internationale Anmeldenummer: EP9703293
(87) Internationale Veröffentlichungsnummer: WO9800320

(56) Entgegenhaltungen:
- DE-A- 4 336 464
- US-A- 5 102 311

## Beschreibung

Die vorliegende Erfindung betrifft eine hydraulische Bremsanlage gemäß dem Oberbegriff des Anspruchs 1.

Eine derartige Bremsanlage ist beispielsweise aus der DE 43 36 464 Al bekannt. Die bekannte Bremsanlage weist neben einer Blockierschutzeinrichtung, die nach dem Rückförderprinzip arbeitet, auch eine Einrichtung zur Antriebsschlupfregelung, einer der Arten der Aktivbremsung, auf. Zum Ansaugen von Druckmittel zum Zwecke einer Aktivbremsung sind die Rückförderpumpen der beiden Bremskreise selbstansaugend ausgelegt und weisen eine Saugleitung auf, welche an die Bremsleitung zwischen dem Hauptzylinder und einem Trennventil anknüpft. Die Druckseiten der Rückförderpumpen sind jeweils an die Bremsleitungen unterhalb des Trennventils angeschlossen. Jeder Bremskreis weist in der Bremsleitung zwischen Hauptzylinder und Trennventil oder in der Saugverbindung zwischen Hauptzylinder und der Saugseite der Rückförderpumpe einen drucklosen, passiven Membrandämpfer auf. Dieser Membrandämpfer besitzt eine tellerartige Membran, die sich in beide axiale Richtungen wölben kann. Damit stellt der Membrandämpfer zum einen der Saugseite der jeweiligen Rückförderpumpe des Bremskreises Druckmittel für eine Aktivbremsung zur Verfügung und ist andererseits in der Lage, Druckspitzen von der Druckseite der Pumpe her aufzufangen. Es ist vorgesehen, einen solchen Membrandämpfer entweder in ein Einsatzteil einzubauen, welches ein Außengewinde und ein Innengewinde hat und in den Ventilblock als Zwischenstück eingeschraubt werden kann oder aber den Membrandämpfer direkt in den Ventilblock einzubauen, in welchem er durch einen Gehäuseverschluß gehalten wird. Ein zusätzliches Zwischenstück erfordert auch zusätzlichen Bauraum. Durch die verhältnismäßig große Querschnittsfläche einer Tellermembran ergeben sich aber beim Einbau in einen Ventilblock Schwierigkeiten. Ein Ventilblock ist in der Regel mit ziemlich eng benachbarten Bohrungen versehen, so daß die große Querschnittsfläche einer Tellermembran schlecht in einem solchen Block Platz findet.

Aus der Patentschrift US 5,102,311 ist ein topfförmig aufgebauter Membrandämpfer bekannt, der im Inneren eine mit Gas gefüllte Kammer aufweist und von der Außenseite her mit Druckpulsationen beaufschlagt wird. Durch die Pulsationen wird die Membran nach innen eingedrückt und mittels des Gases wieder in ihre ursprüngliche Form gebracht. Bei einer derartigen Wechselbelastung kann es, bedingt durch die Topfform, insbesondere bei hohen Druckspitzen zu einer Ermüdung des Membranmaterials und schließlich zu einem Versagen des Dämpfers kommen. In diesem Falle gelangt das Gas in den Flüssigkeitskreislauf und kann, falls ein derartiger Dämpfer in hydraulischen Bremsanlagen eingesetzt wird, zu einem Versagen der Bremsanlage führen.

Die vorliegende Erfindung beruht auf der Aufgabe, eine hydraulische Bremsanlage der eingangs genannten Art zu schaffen, deren Membrandämpfer mit einer geringeren Einbauquerschnittsfläche auskommt. Desweiteren soll der Membrandämpfer konstruktiv einfach aufgebaut sein und eine hohe Lebensdauer aufweisen.

Diese Aufgabe wird gelöst in Verbindung mit den kennzeichnenden Merkmalen des Anspruchs 1. Die topfartige Form der Membran erfordert bei großer Oberfläche nur eine geringe Querschnittsfläche. Dabei ist es wichtig, daß das Innenvolumen des von der Membran gebildeten Topfes an eine hydraulische Leitung angeschlossen ist, damit Druckspitzen dieses Elastomerteil nicht zusammendrücken, sondern ausdehnen. Hierdurch wird gewährleistet, daß nach Abklingen einer solchen Druckspitze die Membran in ihre ursprüngliche Form zurückkehrt. Der Membrandämpfer kann an jede Stelle der hydraulischen Bremsanlage gesetzt werden, wo Druckpulsationen auftreten, da sich seine Dämpfungscharakteristik bedarfsgerecht variieren läßt.

Durch das axiale Anpressen eines radial nach außen gerichteten Randes an einen Gehäuseanschlag kann der Rand der Membran zugleich als Gehäuseabdichtung genutzt werden. Das zur axialen Beaufschlagung des Randes genutzte Halteelement kann zur Vereinfachung der Montage einstückig mit einem Gehäuseverschlußdeckel gefertigt sein. Dieser Deckel muß dann nicht mehr separat abgedichtet werden. Er kann eingepreßt oder eingestemmt werden.

Zur Vermeidung von Beschädigungen der Membran empfiehlt es sich, an den der Membran zugewandten Wänden keine scharfen Ecken und Kanten vorzusehen. Wenn die Membran mit ihrem Boden schon in drucklosem Zustand einen axialen Anschlag berührt, wird eine Überdehnung und eine Beschädigung der Membran auch unter hohem Druck vermieden. Die konstruktiv einfachste Lösung für einen solchen Anschlag ist diejenige, daß der Gehäuseverschlußdeckel zugleich den Anschlag bildet. Soll jedoch im luftgefüllten Raum ein zu hoher Druck vermieden werden, um eine Permeation zu verhindern, so kann der axiale gehäusefeste Anschlag auch durch ein Einlegeteil gebildet sein, welches mit Luftdurchgängen zu einer weiteren Kammer versehen ist, welche für die Membran nicht zugänglich ist. Wenn die Membran dann den Raum, der für sie zugänglich ist, vollständig ausfüllt, so ist immer noch ein Restvolumen von Luft bzw. Gas vorhanden, welches den Druck auf dieser Seite der Membran niedrig hält.

Eine nähere Erläuterung des Erfindungsgedankens erfolgt nun anhand der Beschreibung eines Ausführungsbeispiels in einer Figur.

Dargestellt ist ein Ausschnitt einer Schnittdarstellung eines Ventilblocks mit eingebautem Membrandämpfer.

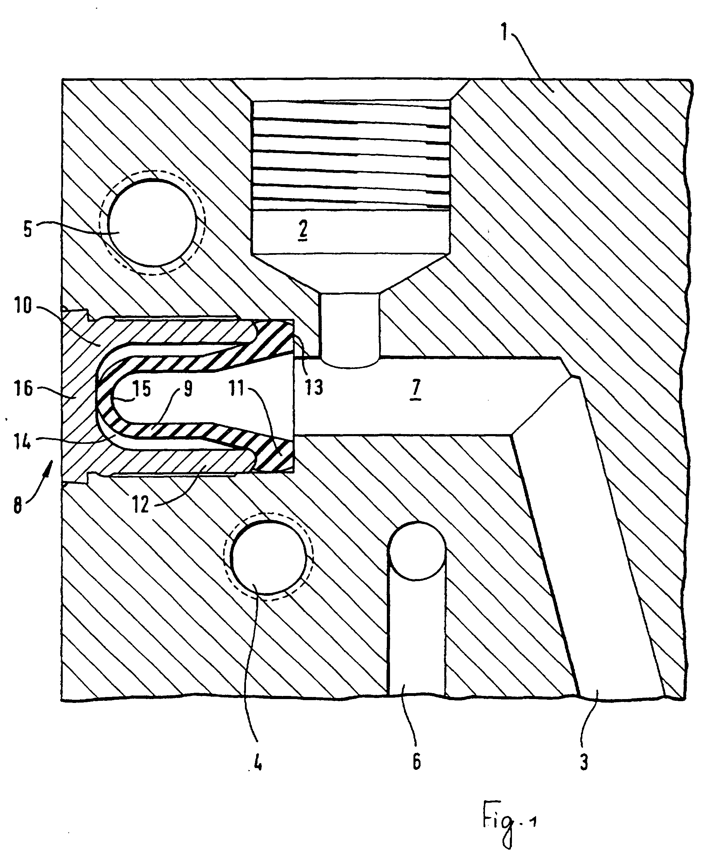

Der dargestellte Ausschnitt eines Ventilblocks 1 zeigt einen Hauptzylinderanschluß 2 mit einer sich daran anschließenden Bremsleitung 3. Um die sehr dicht angelegten Bohrungen innerhalb eines solchen Ventilblocks darzustellen, sind Befestigungsaugen 4 und 5 sowie eine weitere Druckmittelleitung 6 angedeutet. Der Hauptzylinderanschluß 2 mündet in die Bremsleitung 3, welche an dieser Stelle senkrecht zum Hauptzylinderanschluß verläuft. Sie ist in der Abbildung von links in den Ventilblock als Blindbohrung geführt und von unten rechts mit den weiteren hydraulischen Funktionselementen durch eine weitere Bohrung verbunden. Anstelle eines üblichen druckdichten Verschlusses der begrenzt ein Membrandämpfer 8 die Querbohrung 7 nach außen. Der Membrandämpfer 8 weist eine topfartige Membran 9 auf, die von einem Verschlußteil 10 im Ventilblock 1 gehalten wird. Hierzu weist die Membran 9 einen verdickten, nach außen gewölbten Rand 11 auf, welcher von einem zylindrisch ins Innere des Ventilblocks 1 ragenden Fortsatz 12 axial an einer Stufe 13 des Ventilblocks 1 angepreßt wird. Das Verschlußteil 10 weist einen Gehäuseverschlußdeckel 16 auf, der mit dem Ventilblock 1 durch sogenanntes "Self-Clinching" verbunden ist. Da der Rand 11 der Membran 9 eine ausreichende Abdichtung bietet, eignet sich als Befestigung für das Verschlußteil 10 auch eine andere Methode wie z.B. ein Schrauben oder Verstemmung mit dem Ventilblock 1. Zwischen der Topfwand der Membran 9 und dem zylindrischen Fortsatz des Verschlußteiles 10 befindet sich eine Luftkammer 14. Da Luft ein kompressibles Medium bildet, wird die Membran 9 bei jedem Druckpuls, der die Bremsleitung 3 erreicht, ausgedehnt und fängt so Druckspitzen auf.

Das Innere des Verschlußteils 10 besitzt eine abgerundete Form, so daß die Membran 9 nicht durch scharfe Kanten und Ecken beschädigt werden kann. Auch in drucklosem Zustand berührt der Topfboden 15 der Membran 9 den Gehäuseverschlußdeckel (16) des Verschlußteiles 10. Auf diese Weise kann eine Überdehnung der Membran vermieden werden.

Wenn allerdings das Volumen der Luftkammer 14 sehr klein wird, ergeben sich hohe effektive Temperaturen, die eine Permeation durch die Wände der Membran 9 ergeben könnten. Daher kann auch vorgesehen sein, daß das Verschlußteil 10 anstatt eines einstückigen Gehäuseverschlußdeckels einen Einsatz aufweist, der die Ausdehnung der Membran 9 begrenzt, welcher jedoch ein weiteres Luftvolumen von der Membran 9 abtrennt, so daß eine Kompression auf das Volumen 0 nicht möglich wird. Auf diese Weise kann eine allzu große Druckerhöhung und somit Temperaturerhöhung in der Luftkammer 14 wirksam unterbunden werden.
Wenn ein Einsatz zur Begrenzung der Ausdehnungsmöglichkeiten der Membran vorgesehen ist, so kann dieser mit kleinen Löchern versehen sein oder als poröses Bauteil ausgebildet sein. Wichtig ist, daß zwischen der Luftkammer 14 und der jenseits des Einsatzes befindlichen Luftkammer ein Austausch möglich ist.

## Patentansprüche

1. Hydraulische Bremsanlage mit einer Einrichtung zur Aktivbremsung, mit mindestens einer Bremsleitung (3), welche von einem Hauptzylinder zu mindestens einer Radbremse führt und mit einer Hochdruckpumpe, die mit ihrer Saugseite über eine Saugleitung mit dem Hauptzylinder und mit ihrer Druckseite mit der Radbremse verbindbar ist, und mit einem in einem Gehäuse (1) angeordneten Membrandämpfer (8), dessen Membran (9) einen druckmittelgefüllten Raum (7) von einem gas- oder luftgefüllten Raum (14) trennt und der an eine hydraulische Leitung (3) angeschlossen ist, in welcher zumindest zeitweilig Druckpulse auftreten, **dadurch gekennzeichnet, daß** die Membran (9) topf artig ausgebildet ist, wobei das Innenvolumen des Topfes an die Leitung (3) angeschlossen ist.

2. Bremsanlage nach Anspruch 1, **dadurch gekennzeichnet, daß** die Membran (9) einen verdickten, sich radial nach außen erstreckenden Rand (11) aufweist, der von einem Halteelement (12) axial beaufschlagt und gegen einen Gehäuseanschlag (13) gedrückt wird.

3. Bremsanlage nach Anspruch 2, **dadurch gekennzeichnet, daß** das Halteelement ein hohlzylindrischer Fortsatz (12) eines Gehäuseverschlußdeckels (16) ist.

4. Bremsanlage nach Anspruch 3, **dadurch gekennzeichnet, daß** der Übergang zwischen der Innenseite des Gehäuseverschlußdeckels (16) und der Innenseite des Halteelementes (12) abgerundet ist.

5. Bremsanlage nach einem der vorhergehenden Ansprüche, **dadurch gekennzeichnet, daß** der Topfboden der Membran (9) nach außen gewölbt ist und in entspanntem Zustand einen axialen, gehäusefesten Anschlag (10) berührt.

6. Bremsanlage nach Anspruch 5, **dadurch gekennzeichnet, daß** der axiale, gehäusefeste Anschlag vom Gehäuseverschlußdeckel (16) gebildet ist.

7. Bremsanlage nach Anspruch 5, **dadurch gekennzeichnet, daß** der gehäusefeste Anschlag ein gelochtes oder poröses Einlegeteil ist, daß zwischen Membran (9)und Gehäuseverschlußdeckel (16) befestigt ist.

## Claims

1. Hydraulic brake system including a device for active braking, including at least one brake line (3) which extends from a master cylinder to at least one wheel brake, and including a high-pressure pump which is connectable with its suction side to the master cylinder by way of a suction line and with its pressure side to the wheel brake, and including a diaphragm-type damper (8) having a diaphragm (9) which isolates a chamber (7) filled with pressure fluid from a gas-filled or air-filled chamber (14), the said damper (8) being connected to a hydraulic line (3) in which pressure pulses occur at least temporarily,
**characterized in that** the diaphragm (9) has a bowl-type design, and the inside volume of the bowl is connected to the line (3).

2. Brake system as claimed in claim 1,
**characterized in that** the diaphragm (9) includes a thickened, radially outwards extending edge (11) which is acted upon axially by a retaining element (12) and is urged against a housing stop (13).

3. Brake system as claimed in claim 2,
**characterized in that** the retaining element is a hollow-cylindrical extension (12) of a housing closure lid (16).

4. Brake system as claimed in claim 3,
**characterized in that** the transition between the inside of the housing closure lid (16) and the inside of the retaining element (12) is rounded.

5. Brake system as claimed in any one of the preceding claims,
**characterized in that** the bowl bottom of the diaphragm (9) is curved in an outward direction and contacts an axial stop (10) formed fast with the housing in the relieved condition.

6. Brake system as claimed in claim 5,
**characterized in that** the axial stop formed fast with the housing is provided by the housing closure lid (16).

7. Brake system as claimed in claim 5,
**characterized in that** the stop formed fast with the housing is a perforated or porous insert member which is attached between the diaphragm (9) and the housing closure lid (16).

## Revendications

1. Système de freinage hydraulique comportant un dispositif de freinage actif, ayant au moins une conduite de frein (3) qui mène d'un maître-cylindre jusqu'à au moins un frein de roue, et comprenant une pompe haute pression dont le côté aspiration est relié, par l'intermédiaire d'une conduite d'aspiration, au maître-cylindre, et dont le côté refoulement peut être relié au frein de roue, et comprenant un amortisseur à membrane (8) installé dans un boîtier (1), dont la membrane (9) sépare une chambre (7) remplie de fluide de pression d'une chambre (14) remplie de gaz ou d'air, et qui est raccordé à une conduite hydraulique (3) dans laquelle apparaissent au moins temporairement des pulsations de pression,
**caractérisé en ce que** la membrane (9) est configurée selon une forme de coupelle profonde, le volume intérieur de la coupelle profonde étant relié à la conduite (3).

2. Système de freinage selon la revendication 1, **caractérisé en ce que** la membrane (9) comporte un rebord épais (11) s'étendant radialement vers l'extérieur, qui est axialement comprimé par un élément de maintien (12) et serré contre une butée (13) du boîtier.

3. Système de freinage selon la revendication 2, **caractérisé en ce que** l'élément de maintien est un prolongement cylindrique creux (12) d'une culasse (16).

4. Système de freinage selon la revendication 3, **caractérisé en ce que** la transition entre la face intérieure de la culasse (16) et la face intérieure de l'élément de maintien (12) est arrondie.

5. Système de freinage selon l'une des revendications précédentes, **caractérisé en ce que** le fond de coupelle de la membrane (9) est bombé vers l'extérieur et porte, à l'état détendu, contre une butée axiale (10) fixe par rapport au boîtier.

6. Système de freinage selon la revendication 5, **caractérisé en ce que** la butée axiale fixe par rapport au boîtier est constituée par la culasse (16).

7. Système de freinage selon la revendication 5, **caractérisé en ce que** la butée fixe par rapport au boîtier est un élément insert perforé ou poreux, qui est fixé entre la membrane (9) et la culasse (16).
